# EUROPÄISCHE PATENTSCHRIFT

(11) **EP 0 992 371 B1**
(45) Veröffentlichungstag und Bekanntmachung des Hinweises auf die Patenterteilung: **17.09.2003**
(21) Anmeldenummer: 99119752.6
(22) Anmeldetag: 04.10.1999
(51) Int. Cl.: B60D 1/14, B60D 1/44, A01B 71/06, B62D 49/02

(54) **Vorrichtung zum Kuppeln eines Antriebsfahrzeuges mit einem Koppelrahmen zur Aufnahme von Arbeitsgeräten**
Coupling device for a vehicle with an attachment frame for mounting working implements
Dispositif d'attelage pour un véhicule avec chassis de fixation pour le montage d'outils de travail

(30) Priorität: 08.10.1998 DE 19846341
(43) Veröffentlichungstag der Anmeldung: 12.04.2000
(73) Patentinhaber: CLAAS Selbstfahrende Erntemaschinen GmbH, 33428 Harsewinkel (DE)
(72) Erfinder: Kleffmann, Bernd, 33330 Gütersloh (DE)

(56) Entgegenhaltungen:
- DE-A- 3 739 291
- DE-A- 4 132 889
- FR-A- 2 379 242
- FR-A- 2 454 255
- US-A- 4 572 315

## Beschreibung

Die Erfindung betrifft eine Vorrichtung zum Kuppeln eines Antriebsfahrzeuges, insbesondere eines Schleppers, mit einem von diesem zu tragenden und/oder zu ziehenden Gerät mit einem Koppelrahmen, der sich über eine senkrechte Achse schwenkbar an einer Quertraverse abstützt, wobei die Quertraverse beidendig über Lenker gehalten und jeder Lenker einendig um eine horizontale Achse am Schlepper befestigt und mittels einer Kolbenzylindereinheit anhebund absenkbar ist, und wobei der Koppelrahmen mittels einer weiteren in seinem oberen Bereich angreifenden und mit dem Schlepper verbundenen, längenveränderbaren Einheit neigungseinstellbar ist um den Koppelrahmen in jeder Höhelage selbsttätig oder manuell auszurichten.

Ein derartige Vorrichtung ist beispielsweise aus der DE 41 32 889 A 1 bekannt. Bei der durch diese Schrift bekannten Vorrichtung ist die Schwenkachse unmittelbar mit der Quertraverse verbunden, so daß sich der Koppelrahmen direkt oberhalb der Quertraverse befindet. Der Nachteil einer solchen Ausführungsform ist darin zu sehen, nur ein geringer Schwenkbereich gegeben ist, da ansonsten die Anbaugeräte mit der Quertraverse kollidieren würden. In Kenntnis dieser Tatsache weist die Vorrichtung nach dem Stand der Technik auch nur einige wenige Raststellungen auf, die mit Sperrbolzen manuell gesichert werden müssen.

Der vorliegenden Erfindung liegt daher die Aufgabe zugrunde, den Schwenkbereich des Koppelrahmens und somit den Schwenkbereich der Anbaugeräte auf einfache Art und Weise zu vergrößern, so daß die Möglichkeit besteht, sich allen vorkommenden Ernte- beziehungsweise Arbeitsverhältnissen optimal anpassen zu können, wobei die Verschwenkung des Koppelrahmens selbsttätig in Abhängigkeit von den Bodenverhältnissen oder unter Einfluß des Fahrers gesteuert erfolgen kann.

Diese Aufgabe wird gelöst, durch eine Vorrichtung gemäß Anspruch 1. Diese Vorrichtung weist eine sich vom Schlepper weg erstreckende Doppellasche auf, die mit der Quertraverse mittig festverbunden ist,und die an ihrem der Quertraverse abgewandtem Ende eine senkrechte Achse aufnimmt, an der der Koppelrahmen schwenkbar befestigt ist, wobei der kürzeste Abstand der Schwenkachse zur Quertraverse so gewählt ist, daß der Koppelrahmen und die mit ihm verbindbaren Geräte einen für den Einsatz unter unterschiedlichsten Bodenverhältnissen erforderlichen Schwenkbereich abdecken. Im Vergleich zur Länge der Quertraverse ist dabei die Doppellasche relativ schmal, um keine Behinderung für die mit dem Koppelrahmen zu verbindenden Geräte darzustellen.

In Ausgestaltung der Erfindung wird zudem vorgeschlagen, daß seitlich von der Lasche mindestens eine hydraulische, längenveränderbare, sich mit ihren Enden an der Quertraverse und dem Querholm des Koppelrahmens abstützende Kolbenzylindereinheit vorgesehen ist.

Nach einem weiteren Merkmal der Erfindung besteht die Lasche aus zwei mit Abstand übereinanderangeordneten Platten, die zwischen sich den unteren Querbalken eines Kupplungsrahmens über die Achse aufnehmen. Eine solche Ausbildung hat den Vorteil einer einfachen und robusten Aufnahme für den Koppelrahmen.

Ein weiteres Merkmal der Erfindung wird darin gesehen, daß der Koppelrahmen drei vorkragende Fanghaken zur Ankopplung eines Anbaugerätes oder dergleichen aufweist, von denen einer im oberen Bereich des Kupplungsrahmens und die beiden anderem an je einem Ende des Querholms vorgesehen sind.

Je nach Ausbildung eines Arbeitsgerätes kann es vorteilhaft sein, wenn die Anlenkpunkte der an dem unteren Querholm befestigten Fanghaken höhenverstellbar sind.

Im folgenden soll die Erfindung anhand eines Ausführungsbeispieles und dreier dieses schematisch darstellender Figuren näher erläutert werden. Dabei zeigt:
- Fig. 1: die erfindungsgemäße Vorrichtung in der Draufsicht,

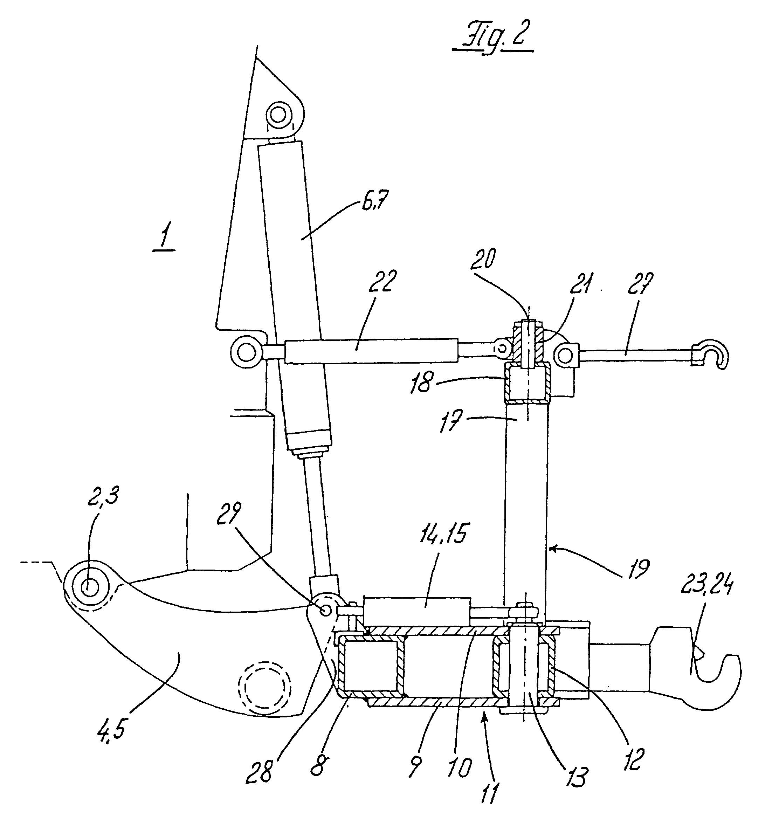

- Fig. 2: die in Fig. 1 dargestellte Vorrichtung in der Seitenansicht und

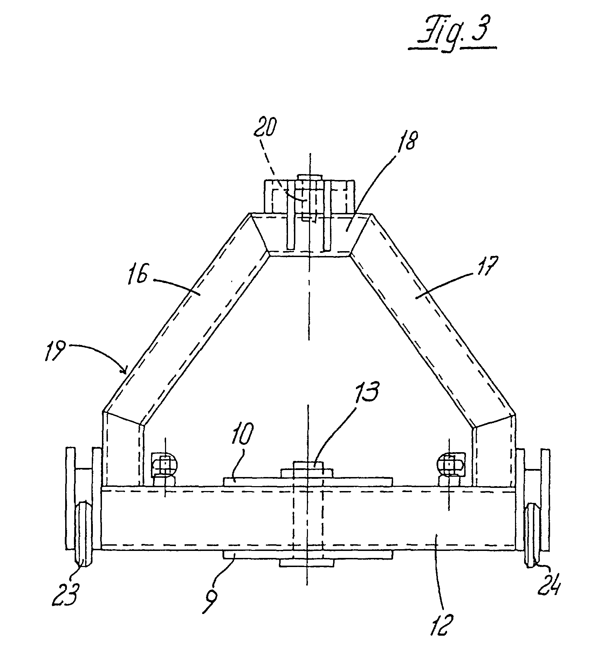

- Fig.3: die in Fig. 2 dargestellte Vorrichtung in Pfeilrichtung -x- betrachtet.

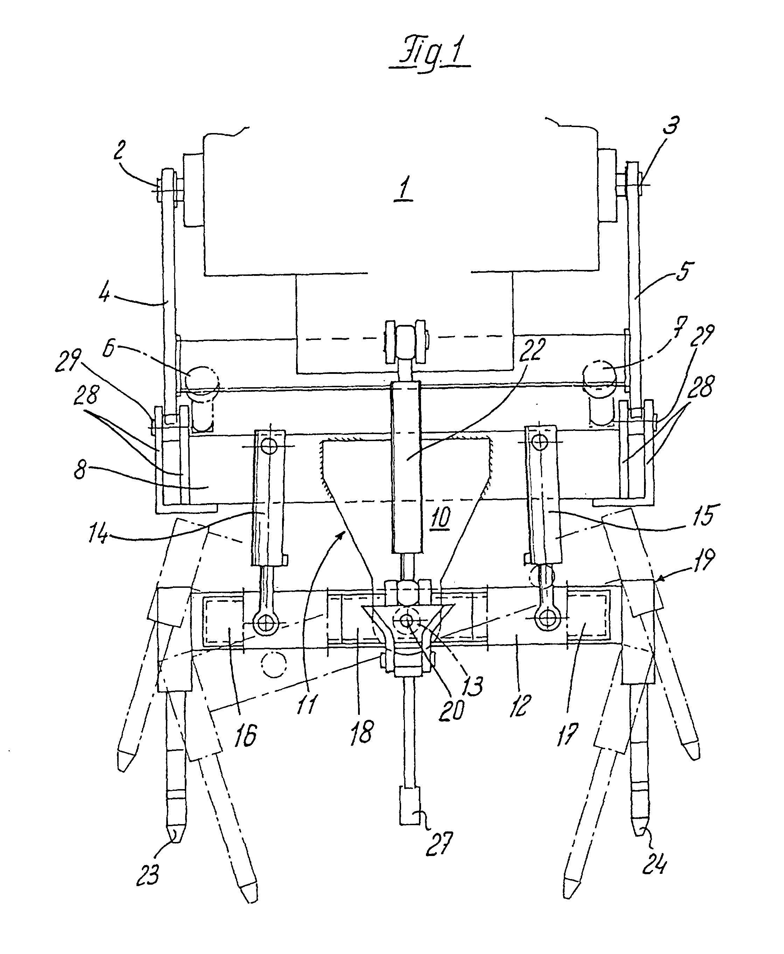

Mit 1 ist ein Schlepper angedeutet, der in seinem hinteren und/oder vorderen Bereich untere horizontale Achsen 2 und 3 aufweist. An diesen Achsen sind Lenker 4 und 5 drehbar gelagert, die über hydraulische Kolbenzylindereinheiten 6 und 7 angehoben beziehungsweise abgesenkt werden können. Mit den den Achsen 2 und 3 abgewandten Ende der Lenker 4 und 5 ist eine Quertraverse 8 über Laschen 28 in den Gelenken 29 verbunden. An diese Quertraverse 8 sind zwei Platten 9 und 10 fest verschweißt, die eine Aufnahmelasche 11 für einen unteren Querholm 12 bilden. Dieser untere Querholm 12 ist um eine senkrechte Achse 13 schwenkbar, die in den beiden Platten 9 und 10 gelagert ist. Eine willkürlich herbeigeführte Schwenkbewegung des Koppelrahmens 19 erfolgt durch die beiden Kolbenzylindereinheiten 14 und 15, die bedarfsweise auch in eine sogenannte Schwinmmstellung geschaltet sein können, so daß sich das Gerät selbsttätig zum Schlepper einstellt. Die möglichen Schwenkstellungen sind in der Fig. 1 mit strichpunktierten Linien dargestellt. Der untere Querholm 12 bildet mit drei weiteren Holmen 16, 17 und 18 einen etwa dreieckförmig ausgebildeten Koppelrahmen, der insgesamt mit 19 bezeichnet ist. An den oberen Holm 18 des Koppelrahmen 19 ist ein Zapfen 20 angeschweißt, der von einem Kopf 21 umgriffen wird. An diesem Kopf 21 greift eine Verstelleinheit 22 an, so daß der gesamte Rahmen 19 bei Betätigung dieser Einheit um die Gelenkpunkte 29 verschwenkt werden kann. Die Betätigung der Verstelleinheit 22 kann zeitgleich und synchron mit der Betätigung der Kolbenzylindereinheiten 6 und 7geschehen, um den Koppelrahmen 19 stets vertikal auszurichten. Um einen Anhänger oder ein Anbaugerät mit dem Koppelrahmen verbinden zu können weist dieser insgesamt drei Fanghaken auf, von denen zwei, nämlich die Fanghaken 23 und 24, über Aufnahmen 25 und 26 mit dem unteren Querholm 12 verbunden sind und der dritte Fanghaken 27 etwa mittig am oberen Holm 18 des Kupplungsrahmens 19 gelenkig befestigt ist. Bei Bedarf sind die unteren Fanghaken 23 und 24 in ihren Aufnahmen 25 und 26 höhenverlagerbar und zwar in Abhängigkeit von der Ausbildung des anzubauenden Gerätes.

### Bezugszeichenliste

- 1: Schlepper
- 2: Achsen
- 3: Achsen
- 4: Lenker
- 5: Lenker
- 6: Kolbenzylindereinheiten
- 7: Kolbenzylindereinheiten
- 8: Quertraverse
- 9: Platte
- 10: Platte
- 11: Aufnahmelasche
- 12: Querholm
- 13: Achse
- 14: Kolbenzylindereinheiten
- 15: Kolbenzylindereinheiten
- 16: Holm
- 17: Holm
- 18: Holm
- 19: Koppelrahmen
- 20: Zapfen
- 21: Kopf
- 22: Verstelleinheit
- 23: Fanghaken
- 24: Fanghaken
- 25: Aufnahmen
- 26: Aufnahmen
- 27: Fanghaken
- 28: Laschen
- 29: Gelenke

## Patentansprüche

1. Vorrichtung zum Kuppeln eines Antriebsfahrzeuges, insbesondere eines Schleppers mit einem von diesem zu tragenden oder zu ziehenden Gerät mit einem Koppelrahmen, der sich über eine senkrechte Achse (13) schwenkbar an einer Quertraverse abstützt, wobei die Quertraverse beidendig über zwei Lenker gehalten und jeder Lenker einendig um eine horizontale Achse am Schlepper befestigt und mittels einer hydraulischen Kolbenzylindereinheit (6,7) anheb- und absenkbar ist, und wobei der Koppelrahmen mittels einer weiteren in seinem oberen Bereich angreifenden und mit dem Schlepper verbundenen längenveränderbaren Einheit (22) neigungseinstellbar ist,
**dadurch gekennzeichnet, daß**
die Quertraverse (8) in Gelenken (29) mit den Lenkern (4, 5) verbunden ist, wobei mit der Quertraverse (8) mittig eine sich vom Schlepper weg erstreckende relativ schmale Lasche (11) fest verbunden ist, die an ihrem der Quertraverse (8) abgewandten Ende die senkrechte Achse (13) aufnimmt, an der der Koppelrahmen (19) schwenkbar befestigt ist, wobei die senkrechte Achse (13) von der Quertraverse (8) absteht.

2. Vorrichtung nach Anspruch 1,
**dadurch gekennzeichnet, daß**
der Abstand der Schwenkachse (13) zur Quertraverse (8) so gewählt ist, dass der Koppelrahmen (19) und die mit ihm verbindbaren Geräte verschwenkbar ist.

3. Vorrichtung nach Anspruch 1,
**dadurch gekennzeichnet,**
**daß** seitlich von der Lasche (11) mindestens eine hydraulische, längenveränderbare, sich mit ihren Enden an der Quertraverse (8) und dem Querhom (12) des Koppelrahmens (19) abstützende Kolbenzylindereinheit (14, 15) vorgesehen ist.

4. Vorrichtung nach Anspruch 1,
**dadurch gekennzeichnet,**
**daß** die Lasche (11) aus zwei mit Abstand übereinanderangeordneten Platten (9) und (10) besteht, die zwischen sich den unteren Querholm (12) des Koppelrahmens (19) über eine Achse (13) aufnehmen.

5. Vorrichtung nach einem oder mehreren der vorgenannten Ansprüche 1 bis 4,
**dadurch gekennzeichnet,**
**daß** der Koppelrahmen (19) drei vorkragende Fanghaken (23, 24 und 27) zur Ankopplung eines Anbaugerätes oder dergleichen aufweist, von denen einer (27) im oberen Bereich des Koppelrahmens (19) und die beiden anderen (23 und 24) an je einem Ende des Querholms 12 vorgesehen sind.

6. Vorrichtung nach Anspruch 5,
**dadurch gekennzeichnet,**
**daß** die Fanghaken (23 und 24) in mit dem unteren Querholm (12) verbundenen Aufnahmen (25 und 26) höheneinstellbar gelagert sind.

## Claims

1. Apparatus for coupling a drive vehicle, in particular a tractor, to an implement which is to be towed or carried thereby, comprising a coupling frame which is supported pivotably on a transverse member by way of a perpendicular axis (13), wherein the transverse member is held at both ends by way of two links and each link is fixed at one end to the tractor about a horizontal axis and can be raised and lowered by means of a hydraulic piston-cylinder unit (6, 7), and wherein the coupling frame is adjustable in respect of inclination by means of a further unit (22) which is variable in length and which engages the upper region of the coupling frame and which is connected to the tractor, **characterised in that** the transverse member (8) is connected in pivots (29) to the links (4, 5), wherein centrally fixedly connected to the transverse member (8) is a relatively narrow plate (11) which extends away from the tractor and which at its end remote from the transverse member (8) carries the perpendicular axis (13) at which the coupling frame (19) is pivotably fixed, wherein the perpendicular axis (13) stands away from the transverse member (8).

2. Apparatus according to claim 1 **characterised in that** the spacing of the pivot axis (13) with respect to the transverse member (8) is so selected that the coupling frame (19) and the implements which can be connected thereto is pivotable.

3. Apparatus according to claim 1 **characterised in that** provided laterally of the plate (11) is at least one hydraulic, variable-length piston-cylinder unit (14, 15) which is supported with its ends at the transverse member (8) and the transverse frame member (12) of the coupling frame (19).

4. Apparatus according to claim 1 **characterised in that** the plate (11) comprises two plate members (9) and (10) which are arranged at a spacing in mutually superposed relationship and which between them accommodate the lower frame member (12) of the coupling frame (19) by way of an axis (13).

5. Apparatus according to one or more of preceding claims 1 to 4 **characterised in that** the coupling frame (19) has three projecting catch hooks (23, 24 and 27) for coupling a mounted implement or the like, of which one (27) is provided in the upper region of the coupling frame (19) and the other two (23 and 24) are provided at respective ends of the transverse frame member (12).

6. Apparatus according to claim 5 **characterised in that** the catch hooks (23 and 24) are mounted adjustably in respect of height in mountings (25 and 26) connected to the lower transverse frame member (12).

## Revendications

1. Dispositif d'attelage pour un véhicule moteur, en particulier pour un tracteur, avec un outil de travail porté ou tracté par celui-ci, comportant un châssis d'attelage qui repose avec possibilité de pivotement, par l'intermédiaire d'un axe (13) vertical sur une traverse, la traverse étant tenue à ses deux extrémités par deux bras, chaque bras étant fixé à l'une de ses extrémités à un axe horizontal sur le tracteur et pouvant être levé et abaissé au moyen d'un ensemble piston-cylindre (6, 7) hydraulique, le châssis d'attelage étant réglable en inclinaison grâce à une unité (22) supplémentaire à longueur variable, qui agit dans sa partie supérieure et est liée au tracteur, **caractérisé en ce que** la traverse (8) est liée aux bras (4, 5) par des articulations (29), une patte (11) centrale relativement étroite qui s'étend dans la direction opposée au tracteur étant liée rigidement à la traverse (8), laquelle patte, à son extrémité éloignée de la traverse (8) reçoit l'axe (13) vertical auquel le châssis d'attelage (19) est fixé avec possibilité de pivotement, l'axe (13) vertical étant éloigné de la traverse (8).

2. Dispositif selon la revendication 1, **caractérisé en ce que** la distance de l'axe de pivotement (13) à la traverse (8) est choisie telle que le châssis d'attelage (19) et les appareils liés à celui-ci puissent pivoter.

3. Dispositif selon la revendication 1, **caractérisé en ce qu'**il est prévu sur le côté de la patte (11) au moins un ensemble piston-cylindre (14, 15) qui prend appui avec ses extrémités sur la traverse (8) et sur la poutre transversale (12) du châssis d'attelage (19).

4. Dispositif selon la revendication 1, **caractérisé en ce que** la patte (11) est formée de deux plaques (9) et (10) disposées à distance l'une au-dessus de l'autre et reçoivent entre elles la poutre transversale (12) inférieure (12) du châssis d'attelage (19), par l'intermédiaire d'un axe (13).

5. Dispositif selon une ou plusieurs des revendications précédentes 1 à 4, **caractérisé en ce que** le châssis d'attelage (19) comporte trois crochets (23, 24 et 27) en saillie pour l'attelage d'un appareil adaptable ou similaire, parmi lesquels l'un (27) est situé dans la partie supérieure du châssis d'attelage (19) et les deux autres (23 et 24) à chacune des extrémités de la poutre transversale (12).

6. Dispositif selon la revendication 5, **caractérisé en ce que** les crochets (23 et 24) sont montés avec possibilité de réglage en hauteur sur des supports (25 et 26) liés à la poutre transversale (12) inférieure.
